# EUROPEAN PATENT SPECIFICATION

(11) **EP 1 182 079 B1**
(45) Date of publication and mention of the grant of the patent: **27.04.2005**
(21) Application number: 01610089.3
(22) Date of filing: 23.08.2001
(51) Int. Cl.: B60P 1/00, B60K 15/067, B60R 9/00

(54) **Suspension system for mounting transport cases on vehicles**
Trägersystem für eine Transportbox an Fahrzeugen
Système de support pour boite de transport sur des véhicules

(30) Priority: 25.08.2000 DK 200001261
(43) Date of publication of application: 27.02.2002
(73) Proprietor: Aka Vejen A/S, 6600 Vejen (DK)
(72) Inventor: Kristensen, Aage, 6600 Vejen (DK)
(74) Representative: Larsen, Hans Ole

(56) References cited:
- EP-A- 0 872 372
- WO-A-93/12946
- DE-A- 19 814 975

## Description

The invention relates to a suspension system for mounting transport cases on vehicles, comprising means for mounting/suspension of the cases, said means comprising a frame for the securing of the cases and at least one suspension element, said frame comprising at least one first suspension element for coupling together with/mounting on an item, and said suspension bracket comprising first means for mounting of the suspension bracket on the vehicle.

In step with the efforts which are made in connection with the better utilisation of the cargo spaces on trucks for profitable loads, the possibilities for creating space for the driver and the vehicle's own equipment are restricted. As an example it can be mentioned that it is desirable to have a bed length of 16 metres on a trailer which by legislature is limited to 18 metres, which leaves place for a driver's cabin of only two metres. At the same time herewith, the need is increased for carrying auxiliary equipment and comfort equipment which shall be stored in closed compartments, for example equipment such as refrigerators for food, space for extra footwear, for snow-chains, for spare wheels, for extra batteries, for a mini-kitchen, for washbasins etc.

The need is met by mounting so-called transport cases on the trucks, so that the cargo space and driver's cabin are held free of these extra items. The cases are placed outside the chassis frame and under the bed of the vehicle.

The cases are supplied in many different configurations, depending on the things it is desired to carry, and are suitable for the actual space conditions, which can be very restrictive on the vehicles.

The suspensions or the frames for securing the cases on the vehicle are at present manufactured as a one-off production, and are intended only for the actual cases on the relevant vehicle, in that vehicles of many different makes and many case dimensions are involved.

For example, from EP 0,872,372 there is known a suspension system comprising a holder system/frame for the securing of the items and a suspension bracket comprising two separate suspension elements, a lower suspension element and an upper suspension element, both of which are mounted on the chassis frame of the vehicle by means of bolts.

The holder system/frame comprises a strap which is an integral part of the actual item which is to be suspended, and is mounted on the upper suspension element by means of a plate which is an integral part of the holder system/frame itself. The item thus comprises individual item sections which must surround the holder system/frame.

The upper suspension element comprises a bent plate comprising two surfaces which are fastened to the chassis frame, and between the two surfaces an outwardly-extending inclined surface on which the holder system/frame's integrated plate is fastened. The lower suspension element comprises a substantially C-shaped plate, the opening in which is oriented towards the items.

When an item is thus placed in connection with the holder system/frame, the lower suspension element will serve as a buffer for the item, whereby the suspension element does not have any distinct suspension effect.

The construction and the configuration of the holder system/frame is encumbered with a number of disadvantages, in that it is integrated in the actual item and thus constitutes assemblies for the individual item sections. This will mean that when the holder system/frame or other parts are to be replaced/repaired, the whole of the item must be dismantled, which is troublesome and time-consuming. Moreover, the separate suspension elements can give rise to the holes already drilled in the chassis frame not necessarily being of the right fit, or that they can be used, whereby the suspension elements will be dependent upon the actual make of vehicle. Furthermore, the fastening of the holder comprises only two suspension elements, which means that it is not possible for the positioning of the holder to be adjusted in the horizontal direction.

The object of the present invention is thus to provide a standardised, prefabricated suspension system with which it is possible to piece together a suspension which fits a given case on a given vehicle, and whereby the workshop time for mounting of the case is considerably reduced, i.e. from 2 days to approx. half an hour.

With the system, there is thus achieved a form of standardised dividing surface, so that the frames which are mounted on the case are dependent only on the case dimensions, and the frames which are mounted on the chassis of the vehicle are dependent only on the make of the vehicle.

This object is achieved with a suspension system of the kind disclosed in the introduction, and also where the means further comprise second suspension elements for coupling to/mounting on the first suspension element, said first suspension element being a plate piece placed plane-parallel with the sides of the transport case, and preferably at right-angles to the rear of the case, and where said second suspension element comprises two plate pieces at angles in relation to each other, one of said plate pieces being placed parallel with the first suspension element's plate piece, and the second of said plate pieces being placed parallel with the rear of the case and in orientation with the vehicle, said suspension element also being connected to the first means.

The invention thus comprises a frame which surrounds the transport case itself, and where to the frame there is connected a so-called first suspension element which is typically configured as a bracket in which there are mounting holes. On the chassis of the vehicle there is now secured a so-called suspension bracket, which via one or more distance pieces is typically mounted on the chassis by means of bolts through through-going holes in the distance pieces.

In addition, the suspension bracket has a plate piece extending at right-angles out from the chassis, which plate piece also comprises holes which correspond to the holes which are in the suspension element on the frame itself. By inserting bolts through the holes in the first suspension element and the second suspension element, said holes lying substantially opposite each other, a coupling of the case to the vehicle itself is achieved. The coupling can also be effected by means of welding.

In that the system comprises an intermediate piece, i.e. the second suspension element, it is possible to adjust the distance between side piece and transport case so that the system can be used for all makes of vehicles.

The suspension element, which is expedient in the sense that it thus comes to lie flush with the side end of the case, and by providing the second suspension element, these suspension elements can be coupled against each other by a simple abutment of their surfaces.

By providing a suspension system according to the invention and as disclosed in claim 2 and 3, an expedient coupling together between the first and second suspension element is achieved as disclosed above.

By providing a suspension system according to the invention and as disclosed in claim 4, a stable mounting of the cases on the chassis frame is achieved.

By providing a suspension system according to the invention and as further disclosed in claim 5, it is achieved that there is sufficient space for mounting on the chassis frame, where there are already many fittings.

By providing a suspension system according to the invention and as further disclosed in claim 6, it is achieved that the unit which shall house the case can be built up of few components, which can be assembled to form a finished suspension by means of screws and/or welding.

By providing a suspension system according to the invention and as disclosed in claim 7, it is achieved that the frame is not disposed to become loose during use/transport, and time is saved in not having to assemble individual parts. The frame can expediently be produced by laser cutting.

The profiles constituting the frame can expediently be built into the case itself under the outer cladding, in that the cases are typically built up of wood-fibre plates with an external cladding of thin metal sheets.

The first and the second suspension elements thus extend only out of the rear of the case, so that both the bottom and the sides are executed with smooth cladding sheets.

The invention will now be explained in more detail with reference to the drawing, where
- fig. 1: shows a first example embodiment of a suspension system in relation to a chassis frame seen from the side, and where a case is mounted,
- fig. 2: shows a second example embodiment of a frame,
- fig. 3: shows the suspension system shown in fig. 1, seen in perspective and mounted on a chassis frame,
- fig. 4: shows the suspension bracket for the suspension system shown in fig. 1,
- fig. 5: shows the first suspension element for the suspension bracket shown in fig. 1, and mounted on or constituting an integral part of the frame,
- fig. 6: shows a reinforcement for the suspension bracket of the suspension system shown in fig. 1,
- fig. 7: shows a distance piece for the suspension bracket of the suspension system shown in fig. 1,
- fig. 8: shows a second example embodiment of a suspension system seen in perspective and mounted on a chassis frame,
- fig. 9: shows the suspension bracket for a suspension system shown in fig. 6,
- fig. 10: shows the first suspension element mounted on or constituting an integral part of the frame, and
- fig. 11: shows a chassis clamping plate for the suspension bracket of the suspension system shown in fig. 1.

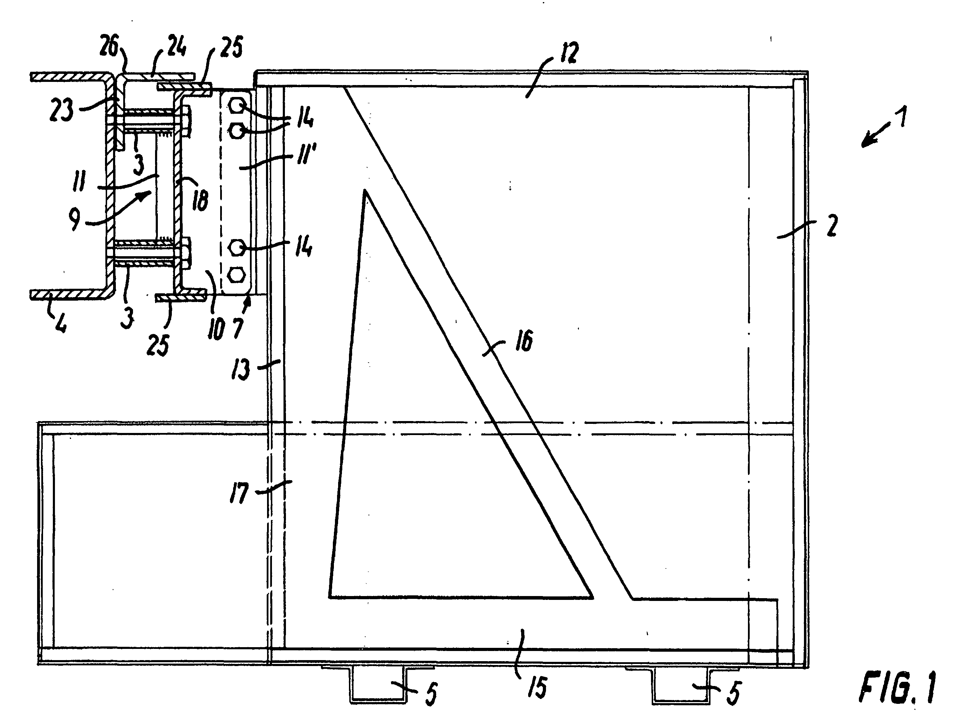

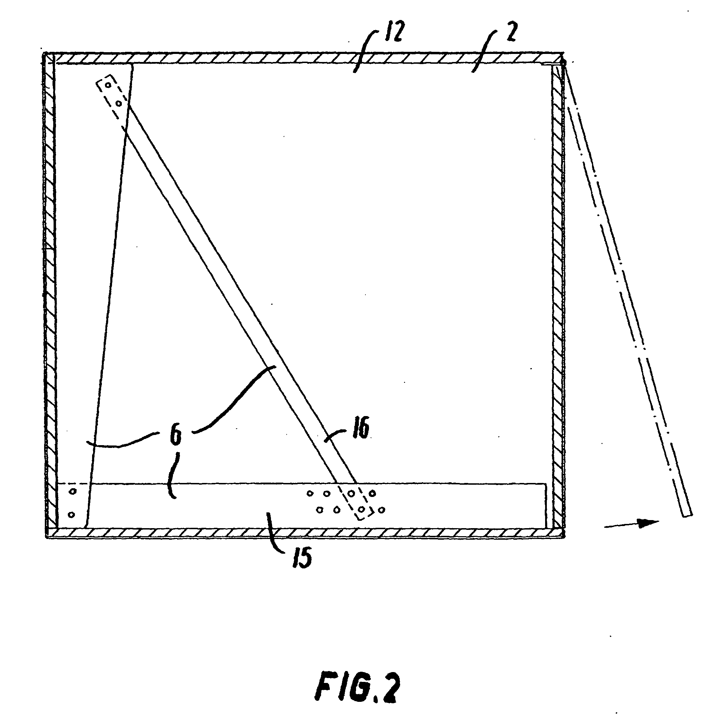

Fig. 1 shows a first example embodiment of the suspension system 1, comprising a frame 6, said frame 6 comprising three types of profiles 15,16,17. The first profile type 15 forms the bottom, the second profile type 17 forms a vertical wall piece, while the third profile piece 16 forms a connection between the first 15 and the second profile piece 17. The profile types 15, 16 17 are provided in one piece, but can, however, be provided as separate profiles as indicated in fig. 2, where for example these are mounted by means of bolts, so that the third profile type 16 is mounted in the upper part of the second profile piece 17 and approximately in the centre of the first profile piece 15, whereby the longitudinal axis of the third profile piece 16 forms an angle V of approx. 45° with the horizontal plane. The transport case 2 itself is mounted in this profile system.

In connection with the first profile type 15, two reinforcing profiles 5 are provided on the underside of this and oriented away from the transport case 2. The number of reinforcing profiles 5 can vary, or they can be completely omitted, but are expedient in the mounting of an additional transport case 2 which can be placed under the first, in that the reinforcing profiles 5 partly create "air" between the transport cases 2 and partly guide the underlying transport case 2 when this is being mounted.

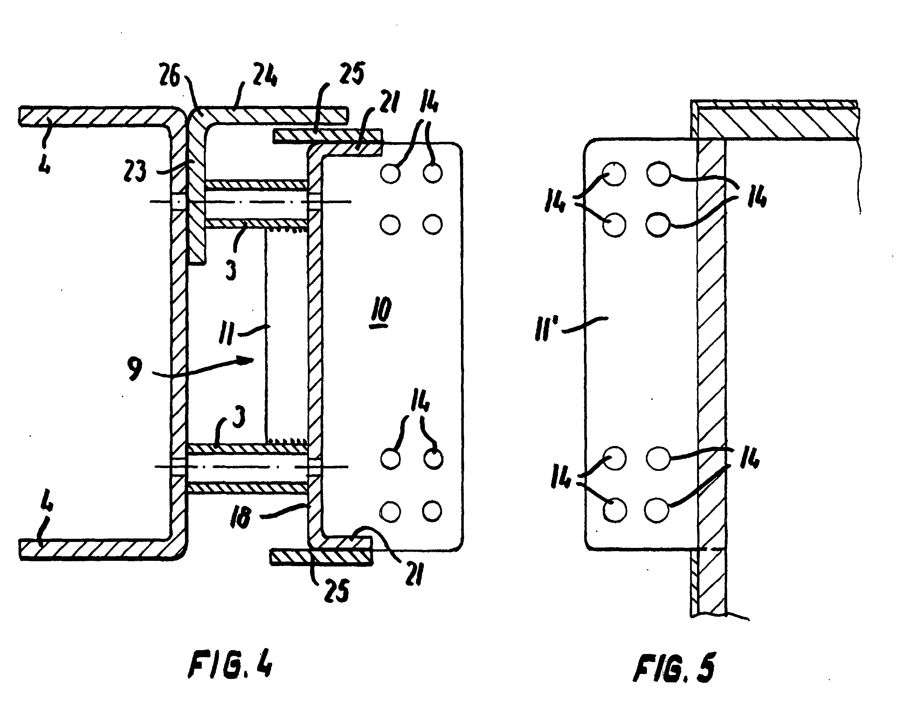

A first suspension element 7 is mounted on the frame 6, said first suspension element 7 preferably being configured as a plate piece 11', and in a manner such as otherwise shown in detail in fig. 5. In the plate piece 11' there are through-going holes 14, so that a bolt can pass through these for the fastening of the first suspension element 7 to the second suspension element 10, such as will be described in the following.

The first suspension element 7 constitutes an integral part of the rear cladding of the frame, so that it stands substantially at right-angles to the rear 13 and is plane-parallel with the side pieces 12 of the transport case, and is disposed in an area where the rear piece and side piece meet. There is thus preferably placed a total of two first suspension elements 7 with a distance between them corresponding to the breadth of the case.

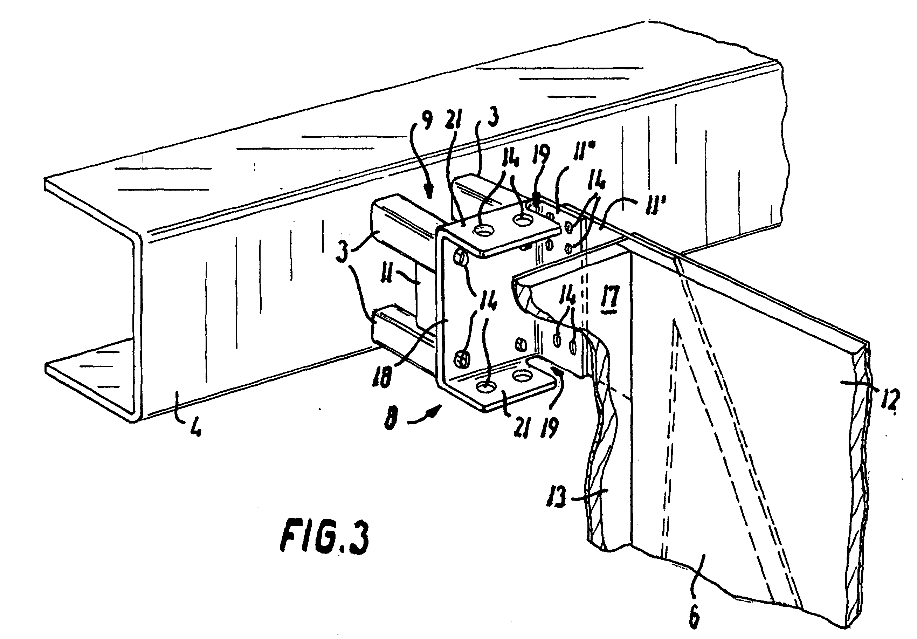

The suspension system 1 further comprises the suspension bracket 8, which is seen indicated partly in fig. 1 but further in perspective in fig. 3. This suspension bracket 8 comprises the second suspension element 10 and a first means 9 for mounting the suspension bracket 8 on the vehicle, preferably on the chassis frame 4 of the vehicle.

The second suspension element 10 comprises two angled plate pieces 11", 18, the one said plate piece 11" being placed parallel with the first suspension element's plate piece 11', and said second plate piece 18 being placed parallel with the rear 13 of the transport case. The second suspension element 10 is produced from a single plate piece which is subsequently bent to form the two respective plate pieces 11", 18. Thereafter, the second plate piece 18 is bent in the formation of two angle pieces 21, whereby the second suspension element 10 more or less forms a partly closed box with two adjoining openings facing towards the transport case 2. Between the angle pieces 21 and the first plate piece 11", a gap 19 is provided whereby the tightening of the first plate piece 11" and the first suspension element's plate piece 11' is made easier.

As mentioned, the mounting is effected by means of the first means 9, said first means 9 comprising at least one distance piece, which is bolted fast via through-going holes 14 both in the plate piece 18 and through-going holes 14 in the chassis frame 4.

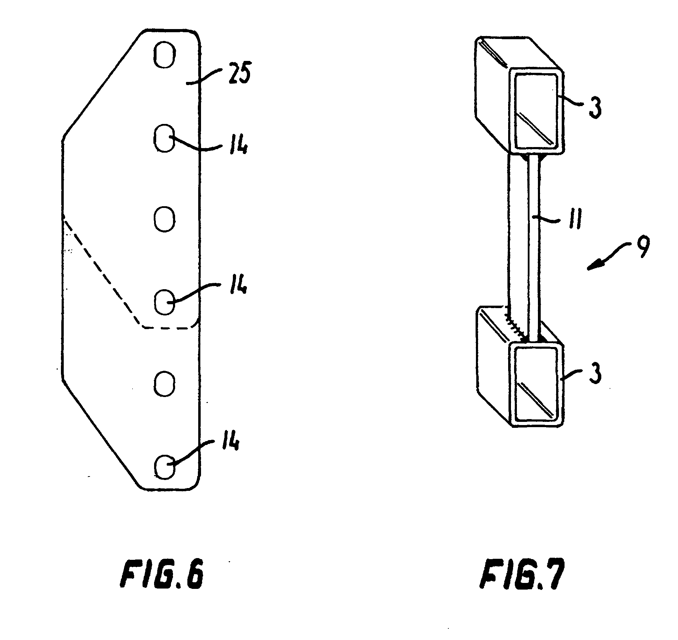

The number of distance pieces 9 can vary, and in this example embodiment use is made of two, where these are placed substantially in connection with the corner areas of the plate piece. As shown in fig. 7, the distance piece 9 comprises two spacing tubes 3 which are held together by a bar 11 to form one unit, whereby the mounting is made easier and the spacing tubes 3 are prevented from turning around. In this connection, the spacing tubes 3 consist of rectangular tubes so that they are able to be used with through-holes of different dimensions. The bar 11 placed between the spacing tubes 3 abuts against the second plate piece 18, whereby the bar 11 serves as reinforcement for the suspension bracket 8.

If the distance between the through-going holes 14 in the second plate piece 18 is not coincident with the through-going holes in the chassis frame 4, with the result that the suspension bracket 8 can not be mounted securely on the chassis frame 4, two suspension brackets 8 can be placed at the side of each other, where these are held together by a reinforcement 25. The reinforcement 25 is placed in connection with the outer side of the suspension element's angle piece 21. The reinforcement 25 can be placed on a single angle piece 21 or on both (see fig. 4), and in such a manner that the limiting edge from the reinforcement 25, respectively the angle piece 21, lies flush in orientation towards the transport case. A reinforcement 25 is seen in detail in fig. 6.

The reinforcement 25 thus comprises a plate which has transverse sides which slope towards the distance piece, and the long side of the plate, oriented towards the transport case, is provided with through-going holes 14 at equal intervals. The length of the reinforcement 25 can vary (marked with the stippled line), and can thus be chosen on the basis of the dimensions of the transport case and respectively the distance between the holes in the chassis frame 4.

As shown in fig. 3, the second suspension element 10 can be narrow rectangular, but can also be broader and thus have the through-going holes 14 in the second plate piece 18 placed at a greater distance from the chassis frame. Which suspension bracket is chosen will thus depend on the given vehicle.

Fig. 4 shows a further detail view of the suspension bracket 8, which as mentioned comprises the plate-shaped second suspension element 10 in which at least four and preferable eight holes 14 are provided, and where in distance and number these correspond to the number in the first suspension element 7.

The suspension bracket 8 further comprises said first means 9 for the mounting of the suspension bracket 8 on the chassis frame 4, and where as shown in fig. 3 it comprises said distance piece which is mounted on the second plate piece 18 of the suspension bracket.

As will also be seen from fig. 4 and fig. 1, between the one spacing tube 3 and the chassis frame 4 there is placed a plate/an angle profile 26. The profile is a reinforcement of the chassis frame, which is used especially where this is heavily loaded, which is the case under the saddle, which supports the foremost part of the semi-trailer. In this example embodiment, the plate 26 is bent in the formation of two angled plate parts, where the one plate part 23 is placed between the spacing tube 3 and the chassis frame 4, while the other plate part 24 extends up over the reinforcement 25 and hereby covers the whole of the spacing tube 3. The second plate part 24 thus serves almost as a "packing" for the whole of the distance piece 9. The configuration of the plate 26 is therefore not important and it can assume any shape.

The frame 6 itself is built up from components, namely three different types of profiles which are provided in one piece, whereby time is saved in the assembly of the profiles 15,16,17, while at the same time no joints arise which could become loose during use/transport.

The frame 6 is built into the case under the outer cladding, in that the case is built up of plates of wood-fibre with an external cladding of thin metal sheets. The interface part, i.e. the coupling between the second suspension element 10 and the first suspension element 7, extends out only on the rear of the case, so that both the bottom and the sides are executed with smooth cladding sheets.

The length of the first profile type 15 varies with the depth of the case, the length of the second profile type 17, which forms the rear cladding part and which supports the interface part, i.e. the first suspension element 7, varies with the height of the case, while the third profile type 16 varies with the height of the case.

The suspension system 1 is thus made up of standardised components which are welded together into a bracket which fits the actual make of vehicle, and which conforms to that distance which is desired between chassis and case.

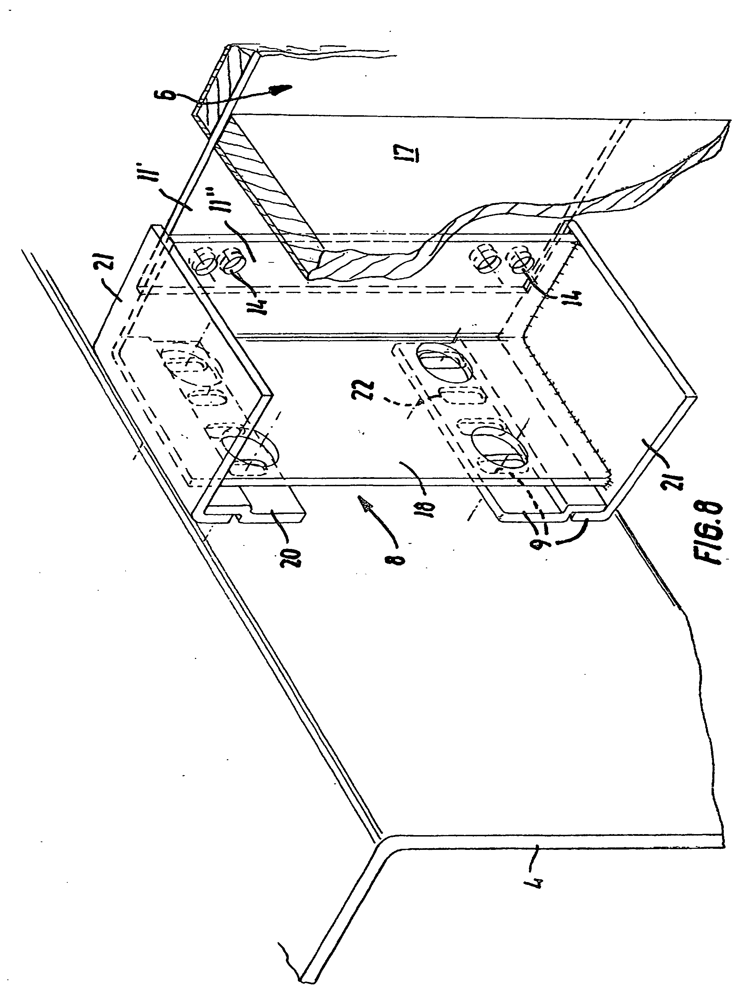

Fig. 8 shows a second example embodiment of a suspension system 1 comprising a frame 6 and a suspension bracket 8.

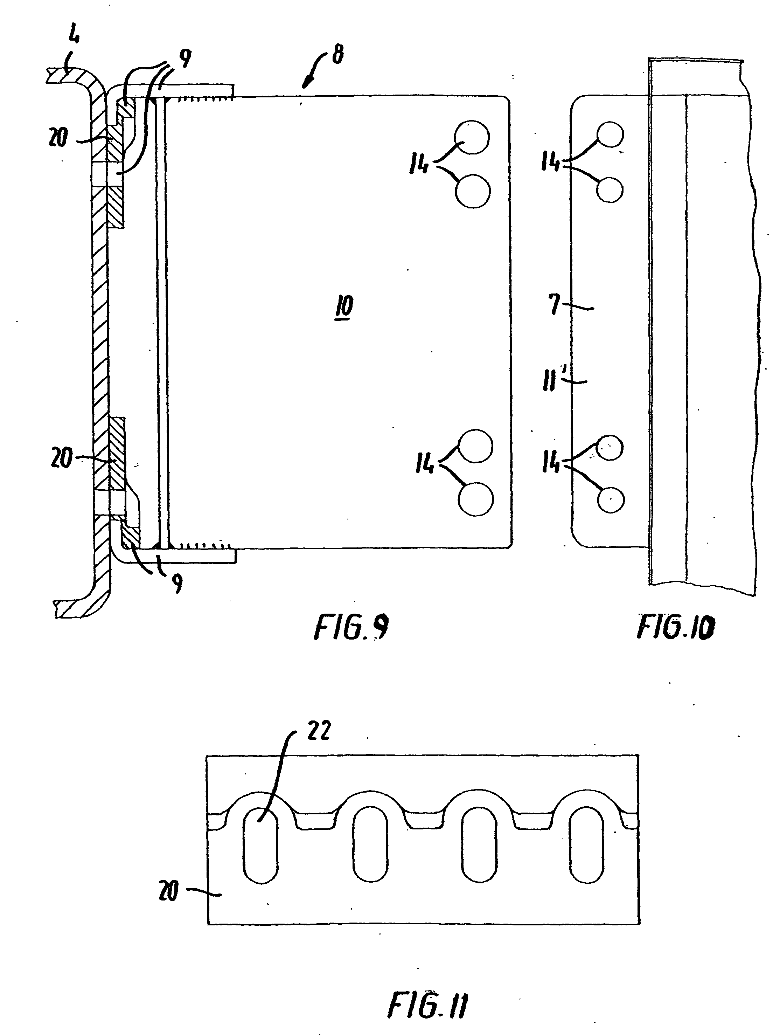

On the frame 6 there is mounted a first suspension element 7, said first suspension element 7 preferably being configured as a plate piece 11' and in a manner such as this is also shown in detail in fig. 10. In the plate piece 11' there are through-going holes 14, so that a bolt can be passed through these for the fastening of the first suspension element 7 to the second suspension element 10, as will be described in the following.

The first suspension element 7 constitutes an integral part of the frame's rear cladding, so that this stands substantially at right-angles to the rear 13 and is plane-parallel with the side pieces 12 of the transport case, and is placed in an area where the rear piece and side piece adjoin. There are thus preferably provided a total of two first suspension elements 7 with a distance between them corresponding to the breadth of the case.

The suspension system 1 further comprises the suspension bracket 8, which comprises a first means 9 for the mounting of the suspension bracket 8 on the vehicle, preferably on its chassis frame 4. The mounting can be effected with a plane-parallel plate piece 18 which can be bolted fast via through-going holes 14 in both the plate piece 18 and the chassis frame. The first means 9 will thus comprise two distance pieces provided by the plate piece 18 itself. Alternatively, angle pieces 21 can be mounted, such as this is also seen in fig. 3, which are mounted on a chassis frame, but where two distance pieces comprising chassis clamping plates 20 are placed between the angle piece 21 and the chassis frame. Such a chassis clamping plate 20 is shown in detail in fig. 11.

The chassis clamping plate 20 thus has elongated holes 14, designated cut-outs 22, which make it possible for the plate 18 to be displaced in these. Alternatively, the plate piece 18 can be welded to the angle pieces 21, said angle pieces 21 extending with their one leg down into a gutter formed between the chassis clamping plate 20 and the chassis. Alternatively, the system can also be configured by the plate piece 18 quite simply being bent into a U-shape at the top, and thus being mounted on the chassis frame itself by an ordinary suspension system. What is important is that from and at right-angles to this plate piece 18 there extends an additional plate piece 11" which is at right-angles to the rear piece, and which has through-going holes 14 at intervals corresponding to the holes which are seen in the first suspension element 7.

As shown in fig. 8, the second suspension element 10 can be narrow rectangular, but can also be broader and thus have the through-going holes placed at a greater distance from the chassis frame. Which suspension bracket is chosen will thus depend on the selected vehicle.

Fig. 9 shows a further detail view of the suspension bracket 8, which as mentioned comprises the plate-shaped second suspension element 10 in which at least two and preferably four holes 14 are provided, and where in distance and number these correspond to the number in the first suspension element 7.

The suspension bracket 8 further comprises first means 9 for mounting in the chassis frame 4, and where as shown in fig. 9 these comprise a chassis clamping plate 20 which are placed both at the top and at the bottom, and which lie at a distance to the chassis frame itself, whereby a gutter is created which an angle-iron can pass down into, said angle-iron thus constituting an integral part of or being welded onto the second suspension element 10 itself, which in this case is plate-shaped.

The frame itself is built up from components, namely three different profile types, which can be joined together to form a finished suspension by assembly with screws or by welding. This frame is built into the case under the outer cladding, in that the case is built up of plates of wood-fibre with an external cladding of thin sheet metal plates. The interface part, i.e. the coupling between the second suspension element 10 and the first suspension element 7, extends out only on the rear of the case, so that both the bottom and sides are executed with smooth cladding sheets.

The length of the first profile type 15 varies with the depth of the case, the length of the second profile type 17, which forms the rear cladding part and which supports the interface part, i.e. the first suspension element 7, varies with the height of the case, while the third profile type 16 varies with the height of the case.

The invention is not limited to the present example embodiment. The coupling together of the second suspension element with the first means can possibly be effected by means of welds.

## Claims

1. Suspension system (1) for mounting transport cases (2) on vehicles, com-prising means for mounting and suspension of the cases (2), said means comprising a frame (6) for securing the cases (2) and at least one suspension bracket (8), said frame (6) comprising at least one first suspension element (7) for coupling together with or mounting on an item, and said suspension bracket (8) comprising first means (9) for the mounting of the suspension bracket (8) on the vehicle, **characterised in that** the suspension bracket (8) further comprises second suspension elements (10) for coupling together with or mounting on the first suspension element (7), said first suspension ele-ment (7) being a plate piece (11') arranged to be placed plane-parallel with the sides of the transport case and preferably at right-angles to the rear (13) of the case, and said second suspension element (10) comprising two plate pieces (11" 18) angled in relation to each other, where the first of said plate pieces (11") is placed parallel with the plate piece (11') of the first suspension element (7), and the second of said plate pieces (18) is arranged to be placed parallel with the rear (13) of the case and in orientation with the vehicle, said second suspension element (10) being further connected to the first means (9).

2. Suspension system (1) according to claim 1, **characterised in that** the first and the second suspension elements (7,10) comprise through-going holes (14), at least two in each element, said through-going holes (14) being placed at identical intervals in the first and second suspension elements (7,10).

3. Suspension system (1) according to claim 2, **characterised in that** the through-going holes (14) are provided in the plate pieces (11', 11", 18).

4. Suspension system (1) according to any of the foregoing claims, **characterised in that** the suspension system (1) comprises at least two first (7) and two second suspension elements (10) placed at a distance from each other, and corresponding substantially to the breadth of the transport case (2).

5. Suspension system (1) according to any of the foregoing claims, **characterised in that** the first means (9) comprise at least one preferably two distance pieces and a corresponding number of bolts (19) for the fastening of the plate piece (18) to the vehicle.

6. Suspension system according to any of the foregoing claims, charact **erised in that** the frame (6) comprises at least three different profile types (15,16,17), and means for the assembly of these.

7. Suspension system (1) according to claims 1 - 5, **characterised in that** the frame (6) comprises at least three different profile types (15, 16, 17), said profile types (15, 16,17) being provided as one element.

## Patentansprüche

1. Aufhängungssystem (1) zum Befestigen von Transportboxen (2) an Fahrzeugen, das Einrichtungen zum Befestigen und Aufhängen der Boxen (2) aufweist, die einen Rahmen (6) zum Sichern der Boxen (2) und zumindest einen Aufhängungsträger (8) aufweisen, und der Rahmen (6) zumindest ein erstes Aufhängungselement (7) zum Zusammenkoppeln mit oder zum Befestigen an einem Bauteil aufweist und der Aufhängungsträger (8) eine erste Einrichtung (9) zum Befestigen des Aufhängungsträgers (8) an dem Fahrzeug aufweist, **dadurch gekennzeichnet, dass** der Aufhängungsträger (8) zweite Aufhängungselemente (10) zum Zusammenkoppeln mit oder zum Befestigen an dem ersten Aufhängungselement (7) aufweist, das erste Aufhängungselement (7) eine Platte (11') ist, die planparallel zu den Seiten der Transportbox und bevorzugt rechtwinklig mit der Rückseite (13) der Box ausgebildet ist, und das zweite Aufhängungselement (10) zwei Platten (11", 18) aufweist, die zueinander gewinkelt sind, wobei die erste der Platten (11") parallel zu der Platte (11') des ersten Aufhängungselementes (7) angeordnet ist, die zweite der Platten (18) ausgebildet ist, parallel zu der Rückseite (13) der Box und in Ausrichtung mit dem Fahrzeug angeordnet zu sein, und das zweite Aufhängungselement (10) ferner mit der ersten Einrichtung (9) verbunden ist.

2. Aufhängungssystem (1) nach Anspruch 1, **dadurch gekennzeichnet, dass** die ersten und die zweiten Aufhängungselemente (7, 10) durchgehende Löcher (14) aufweisen, zumindest zwei in jedem Element, und dass die durchgehenden Löcher (14) in identischen Abständen in den ersten und zweiten Aufhängungselementen (7, 10) angeordnet sind.

3. Aufhängungssystem (1) nach Anspruch 2, **dadurch gekennzeichnet, dass** die durchgehenden Löcher (14) in den Platten (11', 11", 18) vorgesehen sind.

4. Aufhängungssystem (1) nach einem der vorstehenden Ansprüche, **dadurch gekennzeichnet, dass** das Aufhängungssystem (1) zumindest zwei erste (7) und zwei zweite Aufhängungselemente (10) aufweist, die zueinander beabstandet sind und im Wesentlichen der Breite der Transportbox (2) entsprechen.

5. Aufhängungssystem (1) nach einem der vorstehenden Ansprüche, **dadurch gekennzeichnet, dass** die erste Einrichtung (9) zumindest ein, bevorzugt zwei Abstandsstücke und eine entsprechende Anzahl an Bolzen (19) zum Befestigen der Platte (18) an dem Fahrzeug aufweist.

6. Aufhängungssystem nach einem der vorstehenden Ansprüche, **dadurch gekennzeichnet, dass** der Rahmen (6) zumindest drei verschiedene Profiltypen (15, 16, 17) und Einrichtungen für deren Zusammenbau aufweist.

7. Aufhängungssystem (1) nach Ansprüchen 1 bis 5, **dadurch gekennzeichnet, dass** der Rahmen (6) zumindest drei verschiedene Profiltypen (15, 16, 17) aufweist, die als ein Element vorgesehen sind.

## Revendications

1. Système de support (1) pour le support de boîtes de transport (2) sur des véhicules, qui comprend des moyens de montage et de suspension des boîtes (2), lesdits moyens comprenant un cadre (6) pour maintenir les boîtes (2) en place et au moins un support de suspension (8), ledit cadre (6) comprenant au moins un premier élément de suspension (7) pour s'accoupler à ou se fixer sur une structure, et ledit support de suspension (8) comprenant des premiers moyens de fixation (9) pour fixer le support de suspension (8) sur le véhicule, **caractérisé en ce que** le support de suspension (8) comprend en outre des seconds éléments de suspension (10) pour s'accoupler à ou se fixer sur le premier élément de suspension (7), ledit premier élément de suspension (7) étant une plaque (11') disposée de sorte à être dans un plan parallèle aux côtés de la boîte de transport et de préférence en formant des angles droits par rapport à la face arrière (13) de la boîte de transport, et ledit second élément de suspension (10) comprenant deux plaques (11", 18) formant un angle l'une par rapport à l'autre, dans lequel la première desdites plaques (11") est disposée parallèlement à la plaque (11') du premier élément de suspension (7), et la seconde desdites plaques (18) est disposée de sorte à être parallèle à la face arrière (13) de la boîte de transport et orientée selon le véhicule, ledit second élément de suspension (10) étant en outre relié aux dits moyens de fixation (9).

2. Système de support (1) selon la revendication 1, **caractérisé en ce que** les premier et second éléments de suspension (7, 10) comprennent des trous débouchants (14), à raison d'au moins deux trous dans chaque élément, lesdits trous débouchants (14) étant situés à des intervalles identiques dans les premier et second éléments de suspension (7, 10).

3. Système de support (1) selon la revendication 2, **caractérisé en ce que** les trous débouchants (14) sont prévus dans les plaques (11', 11", 18).

4. Système de support (1) selon l'une quelconque des revendications précédentes, **caractérisé en ce que** le système de support (1) comprend au moins deux groupes de premiers (7) et seconds éléments de suspension (10) mutuellement espacés, et correspondant sensiblement à la largeur de la boîte de transport (2).

5. Système de support (1) selon l'une quelconque des revendications précédentes, **caractérisé en ce que** les premiers moyens (9) comprennent au moins une, et de préférence deux pièces intercalaires et un nombre de boulons correspondant (19) pour fixer la plaque (18) au véhicule.

6. Système de support selon l'une quelconque des revendications précédentes, **caractérisé en ce que** le cadre (6) comprend au moins trois différents types de profilés (15, 16, 17), et des moyens d'assemblage de ces derniers.

7. Système de support (1) selon les revendications 1-5, **caractérisé en ce que** le cadre (6) comprend au moins trois différents types de profilés (15, 16, 17), lesdits types de profilés (15, 16, 17) étant fournis sous la forme d'un élément unique.
